(19) Europäisches Patentamt / European Patent Office / Office européen des brevets

(11) **EP 3 179 219 B1**

(12) **EUROPEAN PATENT SPECIFICATION**

(45) Date of publication and mention of the grant of the patent:
**23.05.2018 Bulletin 2018/21**

(51) Int Cl.:
*G01P 3/48* *(2006.01)*      *G01H 1/00* *(2006.01)*

(21) Application number: **15460109.0**

(22) Date of filing: **07.12.2015**

(54) **A METHOD OF AUTOMATIC DETERMINATION OF ROTATIONAL SPEED OF A SHAFT IN A SYSTEM POWERED BY A RECIPROCATING ENGINE**

VERFAHREN ZUR AUTOMATISCHEN BESTIMMUNG DER DREHZAHL EINER WELLE IN EINEM SYSTEM MIT HUBKOLBENMOTOR

PROCÉDÉ DE DÉTERMINATION AUTOMATIQUE DE LA VITESSE DE ROTATION D'UN ARBRE DANS UN SYSTÈME ALIMENTÉ PAR UN MOTEUR ALTERNATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2017 Bulletin 2017/24**

(73) Proprietor: **ABB Schweiz AG**
**5400 Baden (CH)**

(72) Inventors:
• **Rzeszucinski, Pawel**
  **69A/10 Piastowska (PL)**
• **Ottewill, James**
  **Ruislip, Middlesex HA49QY (GB)**
• **Nowak, Jaroslaw**
  **5B/9 Krolow Polskich (PL)**

(74) Representative: **Chochorowska-Winiarska, Krystyna**
**ABB Sp. z o. o.**
**ul. Zeganska 1**
**04-713 Warszawa (PL)**

(56) References cited:
**JP-A- 2000 283 891     JP-A- 2007 132 871**

• **Feldman Michael: "HILBERT TRANSFORM AND ANALYTIC SIGNAL Transform Applications in Mechanical Vibration, Chapter 2" In: "HILBERT TRANSFORM AND ANALYTIC SIGNAL Transform Applications in Mechanical Vibration, Chapter 2", 3 March 2011 (2011-03-03), Wiley, XP055272056, ISBN: 978-0-470-97827-6 pages 8-21, * paragraph [2.10] ***

**Description**

**FIELD OF THE INVENTION**

The subject of the invention is a method of automatically determining a rotational speed of a shaft in a system powered by a reciprocating engine.

**BACKGROUND OF THE INVENTION**

The invention relates to performing condition monitoring of machinery comprising rotating parts, e.g. journal bearings, which are powered by reciprocating engines, e.g. diesel engines. One of the fundamental parameters that needs to be fed into a rotating machinery condition monitoring system is the rotational speed of the shafts operating in the system. This parameter is essential in order to derive other characteristic frequencies of the system that may contain some valuable diagnostic information. In a typical arrangement the method of assessing the condition of a rotating machine may be organized for example in the following way. The vibration generated by the rotating machine is recorded by means of dedicated sensors, for example accelerometers, which are coupled to the vibrating surface, for example the housing of a journal bearing, by means of, for example, studs or adhesive materials. The optimal location of the sensors has been widely described in the literature and specific recommendations can be found in, for example, ISO standard 10816-3:2009. The measured quantities are sampled and transferred via a data acquisition unit to the device capable of storing the sampled data, for example the memory of the data acquisition unit. The data is then processed by means of dedicated software capable of transforming the sampled data into, for example, the frequency domain which allows the diagnosis to be made on the basis of dedicated algorithms implemented in the processing unit, or by means of visual inspection. In the majority of cases, the characteristic frequencies that can be observed in the spectrum are a function of the shaft rotational speed. Most often the shaft rotational speed in the rotating machinery is determined by means of a dedicated hardware e.g. tachometers, encoders or laser light readings installed in close proximity to the rotating shaft. Information provided by these tools give an indication of the rotational speed of the shaft that is easy to interpret and utilize. The disadvantage of such an approach is that additional instrumentation is required which adds to the complexity of the measurement set-up and increases the cost of performing such measurements. Additionally, the installation of such devices needs to be very precise and so it is quite common that the limited accessibility to the typically covered shafts may make the retrofitting of these devices virtually impossible. In the more specific case of rotating machinery powered by reciprocating engines, to which the presented invention relates, the information about the rotational speed of the shaft may also come from the instrumentation of the reciprocating engine.

The idea of using diesel engine firing sequence as a tachometer signal has been previously considered.

From the US patent US 5646340 there is a method of determining the rotational speed of an engine or other rotating elements. The main idea of this solution is based on the measurement of the mechanical vibration of the machine using a vibration sensor adapted to produce a plurality of superimposed waveforms corresponding to engine or machine operating parameters including rotational speed. The speed related signature is recognized by a signature detection algorithm which can recognize and trace the signature across the frequency spectrum covered, hence providing information on the rotational speed of the shaft.

The above mentioned approach, being a representative set of a much broader family of patented solutions, determine the rotational speed of the shaft powered by reciprocating engines, based on dedicated sensors/systems being mounted on the surface or inside of the engine, the speed of which is to be determined.

In "Hilbert Transform and Analytical Signal, Transform Applications in Mechanical Vibration" Chapter 2, Michael Feldman, Wiley 2011, a method is described to calculate the instantaneous frequency of a signal via the analytical signal.

Patent Application JP2000283891 describes a procedure to calculate the rotational speed of a rotating component. The innovative step of the present invention lies in the fact that in order to determine the rotational speed of the shaft of the reciprocating machine no dedicated sensors are required on the body of the reciprocating machine itself, but rather on the machinery subject to the condition monitoring evaluation e.g. a journal bearing which is distant from the body of the reciprocating engine.

**STATEMENT OF THE PROBLEM**

In the field of rotating machinery condition monitoring, the majority of the most commonly used diagnostic methods require information about the shaft rotational speed of the rotating elements in order to reliably assess the condition of the monitored rotating machinery. Typically such information is obtained by means of a dedicated hardware e.g. encoders or tachometers, however these may not always be installed at the monitored machinery. In such a situation stopping the machine in order to install dedicated hardware may not always be feasible or economically viable.

The present invention overcomes this problem by using the information recorded by the standard vibration sensors (provided the condition monitoring system is already in place) mounted on elements which are distant from the body of the engine. This information is utilized to obtain the rotational speed of the engine shaft based on the firing sequence of the engine, in the presented embodiment a diesel engine.

## SUMMARY OF THE INVENTION

A method according to the invention comprises a data acquisition and measurement process, performed in a computer device for acquiring and processing the data, wherein the step of measuring data comprises the measurement of a vibration signal x[n], where n is the length of the acquired signal, of the rotational shaft, further comprising the steps of:

- deriving filtered vibration signal samples $x_F[n]$ of the measured vibration signal x[n]
- obtaining analytic signal $x_A[n]$ of the filtered vibration signal samples $x_F[n]$
- deriving an instantaneous angle signal $x_{iA}[n]$ of the analytic signal $x_A[n]$,
- calculating an instantaneous frequency signal $x_{iF}[n]$ as the sample derivative of the instantaneous angle signal $x_{iA}[n]$ of the analytic signal $x_A[n]$,
- creating an impulses samples vector M[m] from the time domain plot of the instantaneous frequency signal $x_{iF}[n]$, the vector of which represents the torsional oscillations of the shaft caused by the combustion process of the reciprocating engine,
- determination of the shaft speed vector S[m] from the formulae:

$$S[m] = \frac{2 \cdot f_s}{diff(M[m])}$$

where:

$f_s$ is the sampling frequency of the system,
m = 1, 2, ..., K where K is the total number of impulse samples.

Optionally the method according to the invention comprises the steps of a calculation of condition parameters on the basis of values of the shaft speed vector S[m], delivered to the condition monitoring unit for including such data in controlling and monitoring the condition of the rotating machine under investigation.

## ADVANTAGES OF THE INVENTION

One of the advantages of the present invention is that it does not require any additional instrumentation to be used, other than the standard vibration sensor of a standard condition monitoring system. The vibrations generated by the reciprocating engine and recorded by the standard vibration sensor are used in the presented invention to ascertain the rotational speed of the engine shaft. Another advantage of the present invention is that the vibration sensor is not mounted on the reciprocating engine itself, but it is distant from the body of the engine and can be mounted on the body of a different element, in the present embodiment on the casing of a bearing. More specifically, in the present invention the vibrations relating to the firing sequence of the diesel engine are used to assess the shaft rotational speed of the engine and are further utilized in condition monitoring activities. The method contained in the invention is capable of interpreting the recorded signals to provide a robust engine shaft rotational speed determination based on techniques known in the state of the art. The invention does not require any additional instrumentation, apart from the vibration sensors of traditional condition monitoring systems, in order to provide a robust determination of the shaft rotational speed.

## DESCRIPTION OF THE DRAWINGS

A more comprehensive description of the invention will be outlined with reference to the accompanying drawings, in which:

Fig. 1 presents a schematic view on the apparatus for assessing the condition of rotating machinery powered by a reciprocating machinery,
Fig. 2 illustrates vibration signal samples x[n] recorded on a journal bearing distant from the body of the reciprocating engine, on the far end of the shaft rotated by the reciprocating engine,
Fig. 3 illustrates filtered vibration signal samples $x_F[n]$ which are the result of band pass filtering vibration signal samples x[n],

Fig. 4 illustrates instantaneous angle signal samples $x_{iA}[n]$ of the filtered vibration signal samples $x_F[n]$,

Fig. 5 presents a simplified sketch of a V12 diesel engine with the depicted casing and the cylinders of the engine,

Fig. 6 illustrates instantaneous frequency signal samples $x_{iA}[n]$ of the filtered vibration signal samples $x_F[n]$, and samples comprising the impulses samples vector M, with the corresponding cylinders firing order causing the appearance of impulses in the signal $x_{iA}[n]$,

Fig 7 illustrates elements of the shaft speed vector S containing information on the rotational speed of the shaft for every corresponding cylinder cycle,

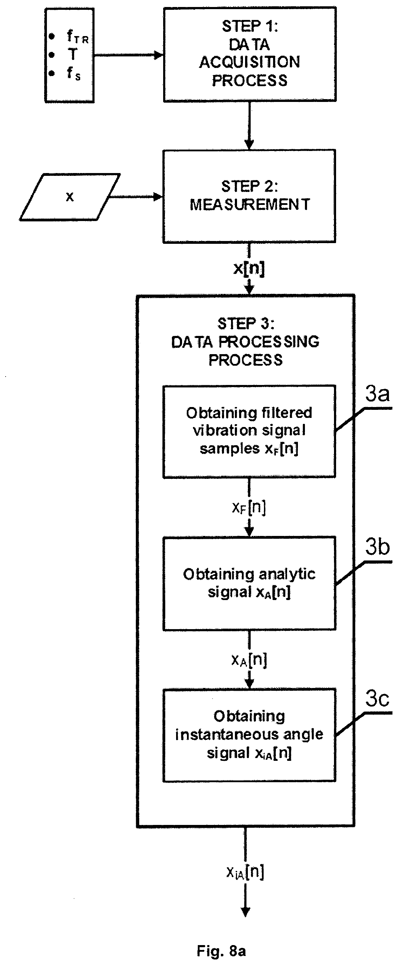

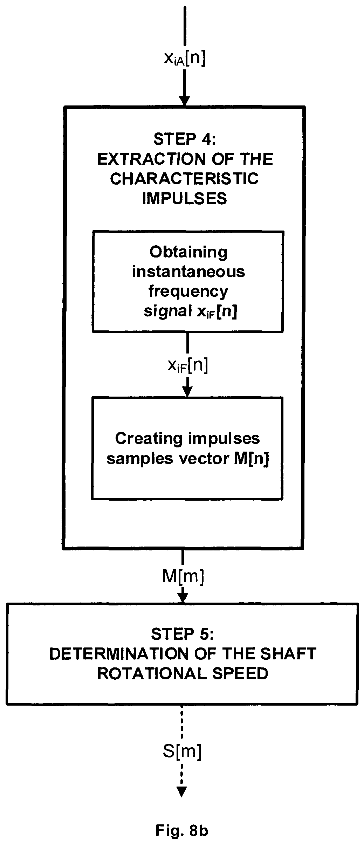

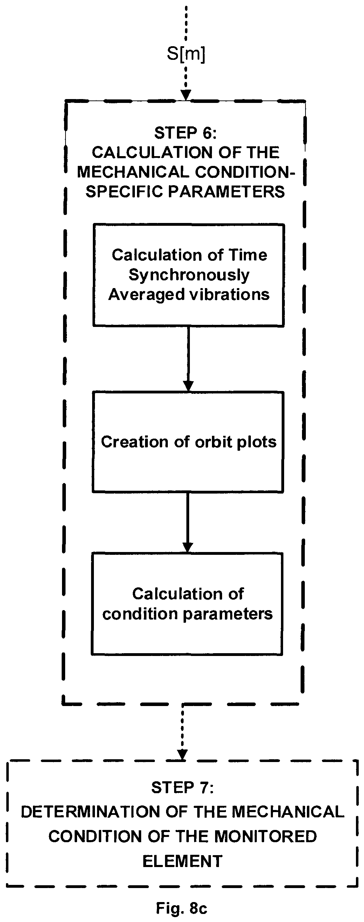

Fig.8 (8a, 8b, 8c) shows a general overview of the method of the present invention.

## DETAILED DESCRIPTION OF THE INVENTION

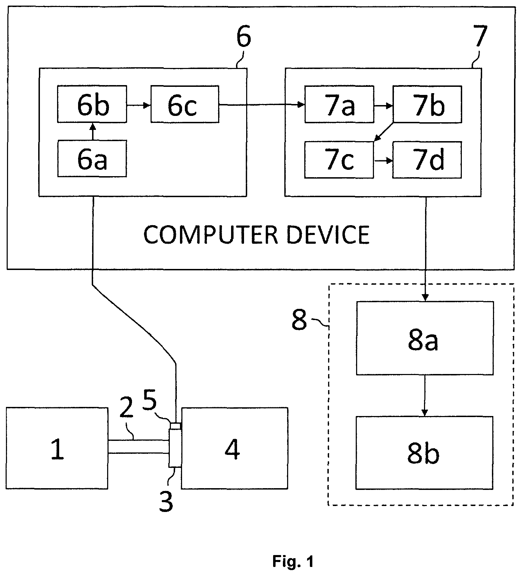

Fig. 1 shows a schematic view of a system comprising a preferred embodiment of the method for the automatic determination of rotational speed of a shaft in a system powered by a reciprocating engine. The presented exemplar embodiment of the invention presents an arrangement for determining the rotational speed of the engine shaft, which operates within a journal bearing, by means of a method of the invention.

The example comprises a system where a reciprocating engine 1, for example a V diesel engine with twelve cylinders (V12), rotates a shaft 2 at a speed, the determination of which is the subject of the present invention. This shaft is supported by a bearing 3, in the example represented by a journal bearing. The rotating shaft 2 is driving an electrical loading element 4, for example a generator operating at a supply frequency $f_{ss}$.

The rotation of the shaft 2 within the bearing 3 leads to the generation of mechanical vibrations which are transmitted to the casing of the said bearing. The vibrations are measured by means of a suitable vibration sensor 5, in the example an accelerometer mounted on the casing of the bearing 3.

The preferred mounting location of the acceleration sensor 5 on the casing of the bearing 3 is in the horizontal direction however other locations and orientations may also be used. In Fig. 1 the vibration sensor is mounted in the vertical direction for easier depiction. The vibration sensor 5 is connected to a data acquisition unit (DAQ) 6. The DAQ is a computer device and has a preprocessing module 6a for performing the standard signal preprocessing operations well known to a person skilled in the art, for example signal amplification or low-pass anti-aliasing filtration, a sampling module 6b for sampling the preprocessed vibration signal, and a memory module 6c for storing the samples of the signal. The DAQ 6 is connected with a processing unit 7. The processing unit 7 is a computer device and has an analytic signal creation module 7a for creation of an analytic signal ($x_A[n]$), an instantaneous angle signal creation module 7b for creation of an instantaneous angle signal ($x_{iA}[n]$), an instantaneous frequency signal creation module 7c for creation of an instantaneous frequency signal ($x_{iF}[n]$) and a vector creation module 7d for determination of the exact speed of the shaft ($f_{ER}$). The data acquisition unit (DAQ) 6 and the processing unit 7 can be the same computer device, as is indicated in the drawing by the same frame. In addition to the system presented in the invention the rotating machinery may be equipped with a condition monitoring system 8. It comprises a control unit 8a for controlling and monitoring the condition of the rotating machine under investigation and an alarm triggering device 8b for informing about changes in the condition of the monitored rotating machinery. The condition monitoring system 8 comprising the control unit 8a and the alarm triggering device 8b is indicated with a dashed line in Fig. 1.

The method of the present invention is realized in the following steps.

## Step 1. Data acquisition process

In the first step the user specifies and provides certain parameters which are required in order for the subsequent, automated part of the invention to be operational. These parameters are the following:

-    an expected rotational speed of the shaft $f_{TR}$,
-    a length of the measurement time period T,
-    a sampling frequency $f_S$,

The nameplate information of the reciprocating engine 1 might be used to assess the theoretical or the expected rotational speed of the shaft. If no such information is available, in order to perform the data acquisition process correctly, an assessment of the most probable shaft rotational speed should be made. In the exemplar embodiment the theoretical rotational speed of the shaft $f_{TR}$ within journal bearing 3 of the electrical loading element 4 was 720 rotations per minute, which corresponds to 12 rotations per second, so $f_{TR}$ is equal to 12Hz.

The preferred length of the measurement period T is at least 100 times the time corresponding to the nameplate or the assessed shaft rotational speed $f_{TR}$. The greater the length of the measurement period T, the better the representation of the signal and the more accurate the results of the automatic determination of rotational speed of a shaft in a rotating machine. When the rotational speed of the shaft $f_{TR}$ is equal to 12Hz (0.083 of a second), according to the preferred embodiment the measurement period T should be at least 8.3 seconds.

The sampling frequency $f_s$ which informs about the rate at which the mechanical signal will be sampled during the acquisition process. In the preferred embodiment in order to perform a reliable data acquisition process and to obtain reliable results with the described invention the sampling frequency $f_s$ should be at least 100 times the nameplate or the assessed shaft rotational speed $f_{TR}$. If the rotational speed of the shaft $f_{TR}$ is equal to 12Hz, the sampling frequency $f_s$ should be at least 1200Hz. The length of the acquired signal N will therefore be equal to the product of $f_s$ and T.

**Step 2. Measurement.**

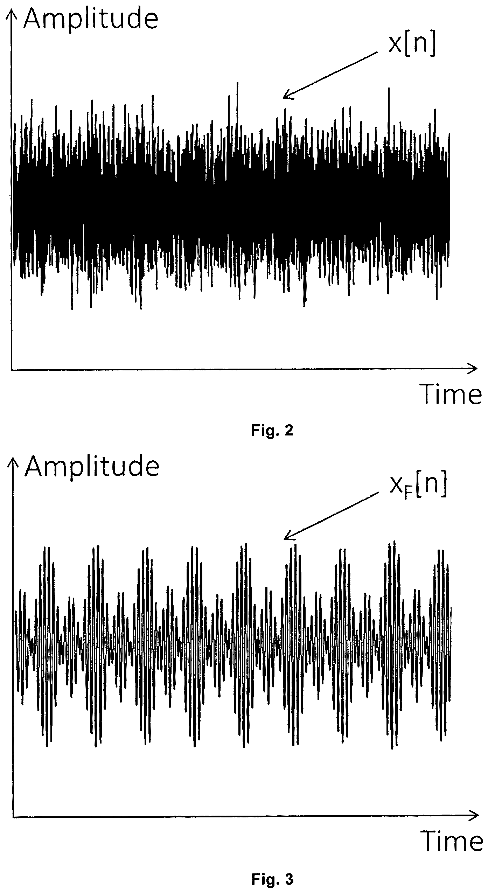

In this step the process of recording the vibration signal x by the DAQ 6 is initiated. Once the data acquisition process is initiated, the vibration signal x is subject to preprocessing by means of, for example signal amplification or low-pass anti-aliasing filtration, after which samples of the vibration signal x are collected at the sampling frequency $f_s$ for the measurement period T. This takes place in the DAQ preprocessing module 6a. Eventually the collected vibration samples x[n] sampled in the DAQ sampling module 6b at the frequency $f_s$ for the measurement period T are stored in the memory of the DAQ 6c. The time domain plot of the vibration signal samples x[n] is shown in Fig. 2.

**Step 3. Data processing**

After the data acquisition process is finished and the data are stored in the memory 6a of the DAQ, the measurement data are sent to the processing unit 7 which performs the automatic determination of rotation speed of a shaft in a rotating machine in the following steps:

3a - band pass filtering the measured vibration samples x[n] around the frequency fss of the electrical loading element 4, obtaining filtered vibration signal samples $x_F$[n],

3b - deriving a signal $x_A$[n], being the analytic version of the filtered vibration signal samples $x_F$[n],

Steps 3a and 3b are performed in the analytic signal creation module 7a,

3c - calculating a signal $x_{iA}$[n], being the instantaneous angle of the analytic version of the filtered vibration signal samples $x_A$[n],

Step 3c is performed in the instantaneous angle signal creation module 7b.

For a person skilled in the art band pass filtering the vibration signal samples x[n] around the known frequency, in the presented embodiment frequency fss of the electrical loading element 4, will not be difficult. Many different filter designs may be used for the task. These may include, but are not limited to, for example Butterworth filters or Chebyshev filters. In the exemplar embodiment of the present invention the Butterworth filter is used. The width of the filtering band may be different depending on many factors which might include, but are not limited to, the frequency fss of the electrical loading element 4, the theoretical rotational speed of the shaft $f_{TR}$, the signal-to-noise ratio in the system etc. For the sake of a simplified description of the present invention the width of the filtering band is set to twice the theoretical shaft rotational speed $f_{TR}$. The output of band pass filtering the vibration signal samples x[n] around the frequency fss of the electrical loading element 4, with a band pass filter are the filtered acoustic signal samples $x_F$[n]. The time domain plot of the filtered vibration signal samples $x_F$[n] is shown in Fig. 3.

The process of obtaining signal $x_A$[n] is conducted by means of creating the analytic version of the filtered vibration signal samples $x_F$[n]. The analytic signal is derived from the filtered vibration signal samples $x_F$[n] according to the formula:

$$x_A[n] = x_F[n] + j\widehat{x_F}[n] \tag{1}$$

where:

$n$ = 1,2, ... , $N$ where $N$ is the length of the signal, derived as $f_s \cdot T$

$x_A$[n] are samples of the analytic version of the filtered acoustic signal samples $x_F$[n],

j is the imaginary unit,

$\widehat{x_F}[n]$ is the Hilbert transform of the filtered vibration signal samples $x_F$[n] and is derived as per formula:

$$\widehat{x_F}[n] = x_F[n] * \frac{1}{\pi n} \qquad (2)$$

where:

* represents the convolution operator.

The creation of filtered vibration signal samples $x_F[n]$ and its analytic version $x_A[n]$ are performed in the analytic signal creation module 7a.

Next the instantaneous angle signal $x_{iA}[n]$ of the analytic vibration signal samples $x_A[n]$ are derived as the arc tangent of the two components of the analytic signal $x_A[n]$ as per formula:

$$x_{iA}[n] = arctan\left(\frac{\widehat{x_F}[n]}{x_F[n]}\right) \qquad (3)$$

where:

*arctan* is the inverse tangent function.

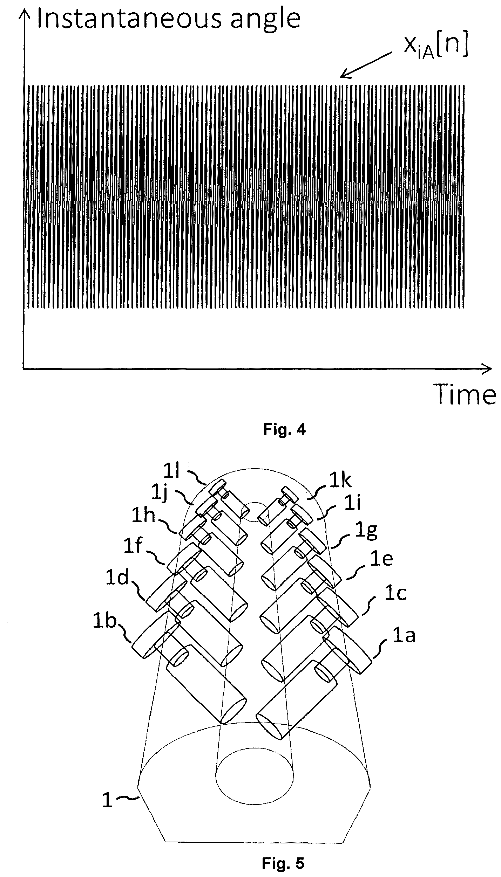

The time domain plot of the instantaneous angle signal $x_{iA}[n]$ is shown in Fig. 4.

The creation of the instantaneous angle of the analytic version of the filtered vibration signal samples $x_{iA}[n]$ is performed in the instantaneous angle signal creation module 7b.

**Step 4. Extraction of the characteristic impulses**

Calculating a signal $xi_F[n]$, being the instantaneous frequency of the analytic version of the filtered vibration signal samples $x_F[n]$, taken directly as differences between adjacent samples of signal $x_{iA}[n]$. Step 4 is performed in the instantaneous frequency signal creation module 7c

In the following step, the instantaneous frequency signal $x_{iF}[n]$ is derived as the sample derivative of the signal $x_{iA}[n]$ as per formula:

$$x_{iF}[n] = diff(x_{iA}[n]) \qquad (4)$$

where:

*diff* is a vector of the differences between adjacent samples of the instantaneous frequency signal $x_{iA}[n]$

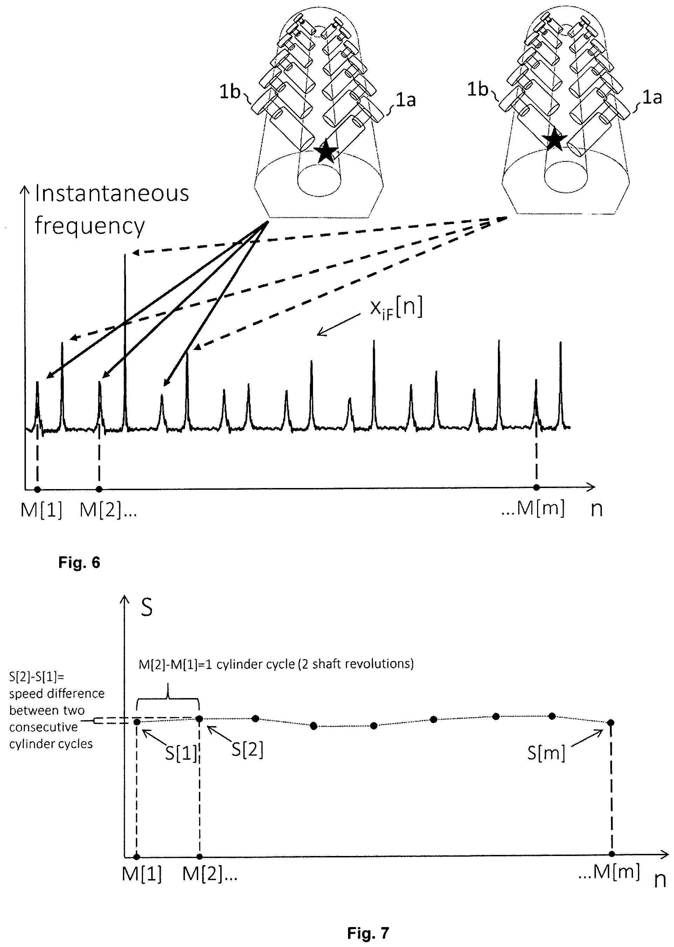

The time domain plot of the instantaneous frequency signal $x_{iF}[n]$ is shown in Fig. 6. The creation of the instantaneous frequency of the analytic version of the filtered vibration signal samples $x_{iF}[n]$ is performed in the instantaneous frequency signal creation module 7c. Signal $x_{iF}[n]$ contains information on the instantaneous changes in the frequency of the filtered vibration signal $x_F[n]$. Amongst others, the signal contains signatures of the firing sequence of the reciprocating engine 1. The firing sequence is the order of power delivery in reciprocating engine as a result of combustion taking place in the cylinders of the engine. The abrupt combustion process excites linear vibrations which propagate in the shaft of the system as well as torsional oscillations of the shaft of the system. These excitations are contained in the measured vibration signal. In the exemplar embodiment of the presented invention the reciprocating engine 1 was a 4-stroke V12 diesel engine. In a 4-stroke machine the full cycle of a single cylinder completes with every two revolutions of the shaft. In a V12 system the cylinders are arranged in two rows. Fig. 5 shows a simplified sketch of a V12 diesel engine with the depicted casing and the cylinders of the engine. A firing sequence in a typical V12 engine might, for example, be as in Table 1:

Table 1

| Cylinder reference as in Fig. 5 | Firing order |
|---|---|
| 1a | 1 |
| 1b | 6 |
| 1c | 9 |

(continued)

| Cylinder reference as in Fig. 5 | Firing order |
|---|---|
| 1d | 2 |
| 1e | 5 |
| 1f | 10 |
| 1g | 11 |
| 1h | 4 |
| 1i | 3 |
| 1j | 8 |
| 1k | 7 |
| 1l | 12 |

The acceleration sensor 5 mounted on the casing of the bearing 3 records signatures of the firing of the two cylinders, one from each row in the V12 system, which are closest to the acceleration sensor 5 i.e. 1a and 1b. These signatures, after applying the signal processing steps contained in this invention, appear as characteristic impulses in signal $xi_F[n]$, Deriving the sample numbers from signal $x_{iF}[n]$ at which the characteristic impulses occur will not be difficult for a person skilled in the art of signal processing. These sample numbers are contained in the impulses samples vector M. Since the impulses in the signal $x_{iF}[n]$ originate from firing of two cylinders 1a and 1b, and since it takes two shaft rotations for a full cycle of cylinder 1a to complete, the information on the rotational speed of the shaft is computed for every consecutive full cycle of cylinder 1a. This translates to taking every other impulse occurring in the signal $x_{iF}[n]$. This situation is shown in Fig. 6. where each impulse in signal $x_{iF}[n]$ comes from (alternately) firing of cylinder 1a and 1b. The firing of the cylinder is depicted as a star icon. Therefore the length m of the impulses samples vector M will be equal to half the number of impulses present in signal $x_{iF}[n]$.

**Step 5. Determination of the shaft rotational speed**

Deriving impulses samples vector M containing sample numbers from signal $x_{iF}[n]$ at which characteristic impulses, related to the firing sequence of cylinders, appear. These peaks carry information relating to the speed of the shaft. More specifically from the impulses samples vector M a shaft speed vector S containing information on the rotational speed of the shaft for every corresponding cylinder cycle can be derived. Eventually the exact speed of the shaft for every consecutive cycle of the cylinder 1a $f_{ER}$, which is the subject of the present invention, is derived as every consecutive element from the shaft speed vector S. Step 5 is performed in the vector creation module 7d.

In order to translate the sample number contained in the impulses samples vector M into rotational speed of the shaft for every full cycle of cylinder 1a the shaft speed vector S of length m is created as per formula:

$$S[m] = \frac{2 \cdot f_s}{diff(M[m])} \qquad (5)$$

where:
m = 1, 2, ..., K where *K* is the total number of impulse samples.

The creation of the impulses samples vector M as well as the creation of the shaft speed vector S is performed in the vector creation module 7c. In Fig. 6 it can be seen that there are 18 impulses, and so by taking sample number of every other impulse (i.e. only coming from cylinder 1a), the length of impulses samples vector M, m=9. Correspondingly the plot of the rotational speed of the shaft for every full cycle of cylinder 1a, as contained in shaft speed vector S is shown in Fig. 7. The elements of the shaft speed vector S are derived as per Eq. 5.

**Step 6. Optional. Determination of the mechanical condition of the monitored element**

Optionally when a connection to a condition monitoring system 8 is set up, this system might be provided with the information about the shaft rotational speed for the assessment of the condition of the monitored rotating element. Such a condition monitoring system comprises a control unit 8a and an alarm triggering device 8b. In such a case the shaft speed vector S is transmitted to the control unit 8a for including such data in controlling and monitoring the condition of the rotating machine under investigation. In the preferred embodiment the condition of the journal bearing 3 may be assessed by, for example, performing Time Synchronous Averaging (TSA) of the data recorded by the acceleration sensor 5 and further analyzing the data. Also, if the bearing is equipped with a pair of orthogonally mounted sensors, it might be possible to perform Time Synchronous Averaging on the orbit plots, which are very often used as a diagnostic tool in the field of journal bearing diagnostic.

**Step 7. Optional. Triggering an alarm**

According to the result of the analysis the control unit 8a may, for example, trigger an alarm device 8b informing about changes in the condition of the monitored rotating machinery should any of the condition indicators cross a pre-defined threshold values. It is to be understood that the exemplar embodiment presented above is shown to help appreciate the concept behind the described invention and illustrate a possible rather than the only solution. A person skilled in the art will appreciate the fact that many variations and modifications can be made to the invention within the inventive idea disclosed in the accompanying claims.

**Claims**

1. A method of automatic determination of a rotational speed of a shaft in a system powered by a reciprocating engine, using a data acquisition and measurement processes and a computer device for acquiring and processing the data, wherein the step of acquiring an operational data of the rotational shaft is performed in a Data Acquisition Unit (6) and the step of measuring data comprises the measurement of a vibration signal x[n], n=1,2,...,N , where N is the length of the acquired signal, of the rotational shaft performed by a vibration sensor (5), positioning on the journal bearing (3), **characterized in that** the method further comprises the steps of:

   - deriving filtered vibration signal samples $x_F[n]$ of the measured vibration signal x[n],
   - obtaining analytic signal $x_A[n]$ of the filtered vibration signal samples $x_F[n]$,
   - deriving an instantaneous angle signal $x_{iA}[n]$ of the analytic signal $x_A[n]$,
   - calculating an instantaneous frequency signal $x_{iF}[n]$ as the sample derivative of the instantaneous angle signal $x_{iA}[n]$ of the analytic signal $x_A[n]$,
   - creating an impulses samples vector M[m] from the time domain plot of the instantaneous frequency signal $xi_F[n]$, which vector represents the torsional oscillations of the shaft caused by abrupt combustion process of the reciprocating engine,
   - determination of the shaft speed vector S[m] from the formulae:

   $$S[m] = \frac{2 \cdot f_s}{diff(M[m])}$$

   where:

   $f_s$ is the sampling frequency of the system,
   $M$ is the impulses sample vector of length m,
   m = 1, 2, ..., K where K is the total number of impulse sample,
   *diff* is a vector of the differences between adjacent samples of impulses samples vector M

2. A method according to claim 1, **characterized in that** the instantaneous angle signal $x_{iA}[n]$ of the rotational shaft is calculating from the formula:

   $$x_{iA}[n] = arctan\left(\frac{\widehat{x_F[n]}}{x_F[n]}\right),$$

   where:

   *arctan* is the inverse tangent function,

$\widehat{x_F}[n]$ is the Hilbert transform of the filtered vibration signal samples $x_F[n]$,
$x_F[n]$ is filtered vibration signal samples.

3. A method according to claim 1, **characterized in that** the instantaneous frequency signal $x_{iF}[n]$ is calculating from the formula:

$$x_{iF}[n] = diff(x_{iA}[n])$$

where:
*diff* is a vector of the differences between adjacent samples of the instantaneous frequency signal $x_{iA}[n]$

4. A method according to claim 1, **characterized in that** the length of the impulses samples vector M is equal to half the number of impulses present in the instantaneous frequency_signal $xi_F[n]$,

5. A method according to any previous claims, **characterized in that** a calculation of condition parameters is performed in a condition monitoring unit (8), connected to the computer device, using values of the shaft speed vector S[m], delivered to the condition monitoring unit (8) for including such data in controlling and monitoring the condition of the rotating machine under investigation.

6. A method according to claim 5, **characterized in that** the condition parameters calculated in the condition monitoring unit (8) contain the data recorded by an vibration sensor (5) in the Data Acquisition Unit (6) of a computer device and an assessment of the journal bearing (3) is performed in the condition monitoring unit (8) using the method of Time Synchronous Averaging (TSA) for recorded data or method of Time Synchronous Averaging on an orbit plot if the journal bearing (3) is equipped with a pair of orthogonally mounted sensors.

7. A method according to claim 5 or 6, **characterized in that** an alarm is automatically triggered when the values of the condition monitoring parameters calculated in the condition monitoring unit (8) exceed the thresholds given by the user.

8. A computer program product for an automatic determination of a rotational speed of a shaft in a system powered by a reciprocating engine (1), which computer program product is loadable and executable on a computer processing unit (7) connected with a data acquisition unit (6) and which computer program product performs when being executed by processing unit (7) of a computer device, the method according to claims 1-4.

**Patentansprüche**

1. Gegenstand der Erfindung ist ein Verfahren zur automatischen Bestimmung der Drehzahl einer Welle in einem System mit Hubkolbenmotor, unter Einsatz eines Datenerhebungsverfahrens und der Messverfahren sowie eines Rechners zur Ergebung und Bearbeitung dieser Daten, wobei der Schritt der Erhebung von Daten der Drehwelle in der Datenerhebungseinheit (6) stattfindet und der Schritt der Datenmessung die Vermessung des Vibrationssignals x[n], n=1,2....N umfasst, wo N die Länge des von der Drehwelle empfangenen Signals bedeutet, und das Signal durch einen auf einem Gleitlager (3) platzierten Vibrationsmelder (5) generiert wird, **dadurch gekennzeichnet, dass** es auch folgende Schritte umfasst:

- Erhebung von gefilterten Proben des Vibrationssignals $x_F[n]$ von dem gemessenen Vibrationssignal x[n],
- Erhebung eines analytischen Signals $x_A[n]$ aus den durchgefilterten Proben des Vibrationssignals x[n],
- Ableitung des Signals des Momentanwinkels $x_{iA}[n]$ aus dem analytischen Signal
- Errechnung des Signals der Momentanfequenz $x_{iF}[n]$ als Derivat aus der Probe des aus dem analytischen Signal $x_A[n]$ abgeleiteten Signals des Momentanwinkels $x_{iA}[n]$
- Festlegung des Vektors der Impulsproben M[m] aus dem Zeitbereich des Signals der Momentanfequenz $x_{iF}[n]$, welcher die durch den schlagartigen Verbrennungsprozess im Hubkolbenmotor verursachten Drehschwingungen der Welle darstellt,
- Festlegung des Wellendrehzahlvektors S[m] aus der Formel:

$$S[m] = \frac{2 \cdot f_s}{diff(M[m])}$$

wo:

$f_s$ die Abtastrate des Systems,

M der Vektor der Impulsproben mit der Länge m, m=1,2.......,K, wo K die Summe der der Impulsproben ist,

*diff* der Vektor der Unterschiede zwischen den anliegenden Proben des Vektors der Impulsproben M ist.

**2.** Die Methode nach Anspruch 1 **dadurch gekennzeichnet, dass** das Signal des Momentanwinkels $x_{iA}[n]$ der Drehwelle nach folgender Formel berechnet wird:

$$x_{iA}[n] = arctan\left(\frac{\widehat{x_F}[n]}{x_F[n]}\right),$$

wo:

*arctan* die Arkustangens-Funktion,

$\widehat{x_F}[n]$ die Hilbert-Transformation der durchgefilterten Proben des Vibrationssignals $x_F[n]$,

$x_F[n]$ die durchgefilterten Proben des Vibrationssignals sind.

**3.** Die Methode nach Anspruch 1 **dadurch gekennzeichnet, dass** das Signal der Momentanfrequenz $x_{iF}[n]$ nach folgender Formel berechnet wird:

$$x_{iF}[n] = diff(x_{iA}[n])$$

wo:

*diff* der Vektor der Unterschiede zwischen den anliegenden Proben des Signals der Momentanfrequenz $x_{iA}[n]$ ist.

**4.** Die Methode nach Anspruch 1 **dadurch gekennzeichnet, dass** die Länge des Vektors der Impulsproben M der Hälfte der Anzahl der im Signal der Momentanfrequenz $x_{iF}[n]$ anwesenden Impulse entspricht.

**5.** Die Methode nach beliebigem der oben erwähnten Ansprüche **dadurch gekennzeichnet, dass** die Berechnung der Zustandsparameter in der Zustandsüberwachungseinheit (8) stattfindet, die an einen Rechner angeschlossen ist, und zwar unter Einsatz der Werte des Drehzahlvektors der Welle S[m], die an die Zustandsüberwachungseinheit (8) für die Mitaufnahme dieser Daten in die Kontrolle und Überwachung des Zustands der geprüften rotierenden Maschine übermittelt werden.

**6.** Die Methode nach Anspruch 1 **dadurch gekennzeichnet, dass** die in der Zustandsüberwachungseinheit (8) berechneten Zustandsparameter, die durch den Vibrationsmelder (5) in der Datenerhebungseinheit (6) des Rechners gespeicherten Daten umfassen, und in der Zustandsüberwachungseinheit (8) die Bewertung des Gleitlagers (3) unter Anwendung der zeitsynchronen Mittelwertbildung (TSA - Time Synchronous Averaging) der gespeicherten Daten oder der zeitsynchronen Mittelwertbildung auf dem Orbit-Diagramm stattfindet, wenn das Gleitlager (3) mit einem Paar orthogonal montierter Sensoren ausgestattet ist.

**7.** Die Methode nach Anspruch 5 oder 6 **dadurch gekennzeichnet, dass** ein Warnsignal automatisch ausgelöst wird, wenn die in der Zustandsüberwachungseinheit (8) berechneten Werte der Überwachungsparameter die vom Nutzer angegebenen Schwellen übersteigen.

**8.** Das Produkt in Form einer Computeranwendung zur automatischen Bestimmung der Drehzahl einer Welle in einem System mit Hubkolbenmötor (1), welche in dem Prozessor des mit der Datenerhebungseinheit (6) verbundenen Rechners (7) geladen und ausgeführt werden kann und welche während ihrer Ausführung durch den Prozessor des Rechners (7) die Berechnungen nach der in den Ansprüchen 1-4 beschriebenen Methodik durchführt.

**Revendications**

1. Procédé de détermination automatique de la vitesse de rotation d'un arbre dans un système alimenté par un moteur alternatif, faisant l'usage de la saisie de données et des processus de mesure et d'un ordinateur pour la saisie et le traitement de ces données, dans lequel le pas de saisie de données opératoires de l'arbre de rotation s'effectue dans l'Unité de Saisie de Données (6) et le pas de mesure des données comprend le mesurage du signal de vibration x[n], n=1,2....N, où N désigne la longueur du signal acquis de l'arbre de rotation, lequel signal est obtenu d'un détecteur de vibration (5) situé sur le palier lisse (3), **caractérisé en ce que** le procédé comprend en outre les pas suivants :

   - l'acquisition des échantillons filtrés du signal de vibration $x_F[n]$ à partir du signal de vibration mesuré x[n],
   - l'acquisition du signal analytique $x_A[n]$ à partir des échantillons filtrés du signal de vibration $x_F[n]$,
   - l'établissement du signal de l'angle instantané $x_{iA}[n]$ à partir du signal analytique $x_A[n]$,
   - le calcul du signal de la fréquence instantanée $x_{iF}[n]$ comme une dérivée de l'échantillon du signal de l'angle instantané $x_{iA}[n]$ établi à partir du signal analytique $x_A[n]$,
   - la détermination du vecteur des échantillons d'impulsions M[m] à partir de la courbe du signal de la fréquence instantanée dans le temps $xi_F[n]$, ledit vecteur représentant les oscillations de torsion de l'arbre provoquées par un brusque processus de combustion dans le moteur alternatif,
   - la détermination du vecteur de la vitesse de l'arbre S[m] à partir de la formule :

$$S[m] = \frac{2 \cdot f_s}{diff(M[m])}$$

   où :

   $f_s$ est la fréquence du prélèvement d'échantillons du système,
   M est le vecteur des échantillons d'impulsions d'une longueur de m, m=1,2........K, où K est le total des échantillons d'impulsions,
   *diff* est le vecteur des différences entre les échantillons adjacents du vecteur des échantillons d'impulsions M.

2. Procédé selon la revendication 1, **caractérisé en ce que** le signal de l'angle instantané $x_{iA}[n]$ de l'arbre de rotation est calculé de la formule :

$$x_{iA}[n] = \arctan\left(\frac{\widehat{x_F}[n]}{x_F[n]}\right),$$

   où :

   arctan □ est la fonction réciproque à la fonction tangente,
   $\widehat{x_F}[n]$ est la transformée de Hilbert des échantillons filtrés de signaux de vibration $x_F[n]$,
   $x_F[n]$ sont des échantillons filtrés de vibration.

3. Procédé selon la revendication 1, **caractérisé en ce que** le signal de la fréquence instantanée $x_{iF}[n]$ est calculé de la formule :

$$x_{iF}[n] = \text{diff}(x_{iA}[n])$$

   où :
   *diff* est le vecteur des différences entre les échantillons adjacents du signal de la fréquence instantanée $x_{iA}[n]$.

4. Procédé selon la revendication 1, **caractérisé en ce que** la longueur du vecteur des échantillons d'impulsions M est égale à la moitié du nombre d'impulsions présentes dans le signal de la fréquence instantanée $x_{iF}[n]$.

5. Procédé selon une quelconque des revendications précédentes, **caractérisé en ce que** le calcul des paramètres d'état est effectué dans l'unité de monitoring de l'état (8) connectée à l'ordinateur, en utilisant les valeurs du vecteur de la vitesse de l'arbre S[m] transmises à l'unité de monitoring de l'état (8) pour intégrer ces données au contrôle et au monitoring de l'état de la machine en rotation.

6. Procédé selon la revendication 5, **caractérisé en ce que** les paramètres d'état calculés dans l'unité de monitoring de l'état (8) comprennent les données enregistréês par le détecteur de vibration (5) dans l'Unité de Saisie de Données (6) de l'ordinateur, et l'appréciation du palier lisse (3) est effectuée dans l'unité de monitoring de l'état (8) faisant l'usage de la méthode Moyennage Synchrone Temporel (TSA - Time Synchronous Averaging) des données enregistrées ou de la méthode Moyennage Synchrone Temporel sur le diagramme de l'orbite si le palier lisse est équipé d'une paire de détecteurs installés perpendiculairement.

7. Procédé selon la revendication 5 ou 6, **caractérisé en ce qu'**un alarme est automatiquement enclenché quand les paramètres de monitoring de l'état calculés dans l'unité de monitoring de l'état (8) excèdent les seuils consignés par l'utilisateur.

8. Le produit sous forme de logiciel pour la détermination automatique de la vitesse de rotation d'un arbre dans le système alimenté par un moteur alternatif (1), lequel logiciel peut être enregistré et exécuté dans le processeur de l'ordinateur (7) connecté à l'unité de saisie de données (6) et que, ce logiciel, lorsqu'il est exécuté par le processeur (7) de l'ordinateur, réalise les calculs en utilisant le procédé selon les revendications de 1 à 4.

**Fig. 1**

**Fig. 2**

**Fig. 3**

↑ Instantaneous angle

$x_{iA}[n]$

Time

**Fig. 4**

**Fig. 5**

**Fig. 6**

**Fig. 7**

STEP 1:
DATA
ACQUISITION
PROCESS

- $f_{TR}$
- T
- $f_S$

x

STEP 2:
MEASUREMENT

x[n]

STEP 3:
DATA PROCESSING
PROCESS

Obtaining filtered
vibration signal
samples $x_F[n]$

3a

$x_F[n]$

Obtaining analytic
signal $x_A[n]$

3b

$x_A[n]$

Obtaining
instantaneous angle
signal $x_{iA}[n]$

3c

$x_{iA}[n]$

Fig. 8a

$x_{iA}[n]$

```
┌─────────────────────────────────┐
│          STEP 4:                │
│     EXTRACTION OF THE           │
│      CHARACTERISTIC             │
│         IMPULSES                │
│                                 │
│    ┌────────────────────┐       │
│    │     Obtaining      │       │
│    │   instantaneous    │       │
│    │     frequency      │       │
│    │  signal xiF[n]     │       │
│    └────────────────────┘       │
│                                 │
│          xiF[n]                 │
│                                 │
│    ┌────────────────────┐       │
│    │                    │       │
│    │  Creating impulses │       │
│    │ samples vector M[n]│       │
│    │                    │       │
│    └────────────────────┘       │
│                                 │
└─────────────────────────────────┘
```

STEP 4:
EXTRACTION OF THE
CHARACTERISTIC
IMPULSES

Obtaining
instantaneous
frequency
signal $x_{iF}[n]$

$x_{iF}[n]$

Creating impulses
samples vector M[n]

M[m]

STEP 5:
DETERMINATION OF THE SHAFT
ROTATIONAL SPEED

S[m]

**Fig. 8b**

S[m]

STEP 6:
CALCULATION OF THE
MECHANICAL CONDITION-
SPECIFIC PARAMETERS

Calculation of Time
Synchronously
Averaged vibrations

Creation of orbit plots

Calculation of
condition parameters

STEP 7:
DETERMINATION OF THE MECHANICAL
CONDITION OF THE MONITORED
ELEMENT

Fig. 8c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5646340 A

- JP 2000283891 B

**Non-patent literature cited in the description**

- **MICHAEL FELDMAN.** Hilbert Transform and Analytical Signal, Transform Applications in Mechanical Vibration. Wiley, 2011